# EUROPÄISCHE PATENTSCHRIFT

(11) **EP 1 873 493 B1**
(45) Veröffentlichungstag und Bekanntmachung des Hinweises auf die Patenterteilung: **08.09.2010**
(21) Anmeldenummer: 06013448.3
(22) Anmeldetag: 29.06.2006
(51) Int. Cl.: G01C 21/34

(54) **Verfahren zur automatischen, rechnergestützten Bestimmung einer für Fahrzeuge befahrbaren Route**
Method for automatic, computer-supported determination of a navigable route for vehicles
Procédé destiné à la détermination automatique par ordinateur d'une route adaptée aux véhicules

(43) Veröffentlichungstag der Anmeldung: 02.01.2008
(73) Patentinhaber: Navigon AG, 20251 Hamburg (DE)
(72) Erfinder: Katzer, Jochen, 91605 Bergtshofen (DE)
(74) Vertreter: von den Steinen, Axel

(56) Entgegenhaltungen:
- WO-A-2006/042689
- DE-A1- 10 031 787

## Beschreibung

Die Erfindung betrifft ein Verfahren zur automatischen, rechnergestützten Bestimmung einer für Fahrzeuge befahrbaren Route von einem Startpunkt zu einem Zielpunkt anhand digitalisierter Kartendaten, wobei in einem Rechner ein Startpunkt und ein Zielpunkt erfasst und anhand möglicher Wegabschnitte die Route bestimmt wird.

Dazu ist dem Stand der Technik die DE 100 31 787 A1 zu entnehmen, die ein Assistenzsystem zur Auswahl von Strecken zeigt, welches insbesondere in einem Navigationssystcm eingesetzt werden kann. Eine Recheneinrichtung sucht nach Eingabe bestimmter Suchkriterien eine bestimmte Strecke aus. Dabei werden fahrtbeeinflusscnde Streckenparameter dazu verwendet, um makroskopische Streckeamerkmale zu ermitteln.

Ferner bezieht sich die WO 2006/042689 A1 auf eine Methode, um einen Sinusindex eines Streckensegments für eine digitale Straßenkarte zu berechnen. Dazu wird zuerst ein Streckenabschnitt ausgewählt und in eine bestimme Anzahl von Zwischenpunkten eingeteilt, zwischen denen wiederum ein bestimmter Abstand liegt. Aus der Anzahl der Zwischenpunkte und der dazwischenliegenden Länge wird ein Verhältnis ermittelt, welches dem Sinusindex zugeordnet werden kann.

Derartige Verfahren sind hinlänglich bekannt. Insbesondere werden solche Verfahren standardmäßig in Navigationsgeräten eingesetzt, so auch in Satellitennavigationsgeräten, die beispielsweise auf das GPS zurückgreifen.

Bekannte Algorithmen zur Bestimmung von Routen greifen typischerweise auf digitalisierte Kartendaten zurück, die in digitaler Form einzelne Wegabschnitte aufweisen. Die Algorithmen zum Bestimmen einer Route stellen die Wegabschnitte unter unterschiedlichen Kriterien zusammen. In einem einfachsten Fall wird die streckenmäßig kürzeste Route gesucht, es werden also die Wegabschnitte gewählt, die insgesamt die kürzeste abzufahrende Route ergeben. Alternativ werden heute standardmäßig Algorithmen verwendet, die sich bei der Bestimmung einer optimalen Route nach der voraussichtlichen Zeitdauer des Abfahrens einer solchen Route orientieren. Hier wird eine aus unterschiedlichen Wegabschnitten zusammengestellte Route hinsichtlich der voraussichtlich benötigten Fahrzeit gewählt, es wird eine Route mit der voraussichtlich kürzesten Zeit errechnet.

Bei modernen Navigationsgeräten können darüber hinaus von einem Benutzer bestimmte Voreinstellungen vorgenommen werden, bei denen die für eine Route zu berücksichtigenden Wegabschnitte zusätzlich unterschiedlichen, vorgcbbaren Kriterien genügen müssen. So kann bei heutigen Navigationssystemen beispielsweise häufig eine Vorgabe gemacht werden, dass die Route ohne Einbeziehung von Fährvcrbindungen oder aber ohne Einbeziehung von mautpflichtigen Straßen ausgesucht werden soll.

Diese Vorgaben dienen allesamt entweder einer möglichst schnellen Fahrt oder einer möglichst kostengünstigen Fahrt. Bisher nicht bekannt ist es, automatisch Routen zu erstellen, die anderen Aspekten genügen, insbesondere einen hohen Freizeitwert haben. Hier soll mit der Erfindung Abhilfe geschaffen werden.

Gattungsgemäß wird diese Aufgabe dadurch gelöst, dass bei einem Verfahren der eingangs genannten Art der Rechner bei der Bestimmung der Route bevorzugt solche Wegabschnitte in die Route einbezieht, die eine hohe Anzahl von Kurven aufweisen. Kurven sind im Sinne der Erfindung solche Wegabschnitte, in denen die Wegführung gekrümmt verläuft. Dabei sind solche Kurven mit engeren, d.h. kleineren Radien im Sinne der Erfindung zu bevorzugen. Insbesondere solche Fahrzeugführer, die eine Route nicht allein danach bestimmen, möglichst schnell oder kostengünstig von einem Ort zum anderen zu gelangen, sondern für die ein Fahrgenuss im Vordergrund steht, bevorzugen häufig kurvige Strecken. Dies gilt insbesondere für die Fahrer von Motorrädern, Sportwagen oder Cabriolets, da Kurvenfahrten gerade bei diesen Fahrzeugen ein sportliches Fahrgefühl vermitteln und somit einen "Unterhaltungs-" bzw. "Freizeitwert" mit sich bringen.

Mit der Erfindung wird es mit anderen Worten erstmals ermöglicht, eine Routenauswahl nicht nur unter praktischen und sachdienlichen Aspekten, sondern auch unter Aspekten eines Fahrerlebnisses zu bestimmen.

Erfindungsgemäß werden die digitalen Kartendaten vor einer Routenbestimmung zunächst so aufbereitet, dass Wegabschnitte mit einer hohen Anzahl von Kurven entsprechend markiert werden, in denen z.B. diesen Daten ein entsprechendes "Kurvenflag" zugeordnet wird. Bei der Bestimmung der Route wird der Rechner dann bevorzugt die solchermaßen markierten Wegabschnitte berücksichtigen bzw. in die Route mit einbeziehen.

Die Aufbereitung der Kartendaten wird erfindungsgemäß bereits bei der ursprünglichen Einrichtung eines entsprechenden Routenbestimmungs-Systems erfolgen, so dass das Datenmaterial der Kartendaten schon mit den Hinweisen bzw. Markierungen kurvenreicher Wegabschnitte versehen ist. Insgesamt kann somit durch das erfindungsgemäßige Verfahren eine schnellere Berechnung der Route bei geringeren Systemressourcen durchgeführt werden.

Grundsätzlich ist es selbstverständlich auch möglich, Routen mit einem hohen Freizeitwert nach anderen Kriterien zusammenzustellen, z.B. durch die Auswahl von Wegstrecken, die als landschaftlich schön bzw. mit schöner Aussicht oder aber als aus historisch-archäologischen Gesichtspunkten interessant oder als architektonisch interessant gekennzeichnet sind. Vergleichbare Kennzeichnungen findet man heute bereits in klassischen Landkarten, wo z.B. als landschaftlich schön anzusehende Streckenabschnitte beispielsweise durch eine grüne Markierung gekennzeichnet sein können. Auch wenn diese Erfindung speziell auf die Auswahl kurvenreicher Strecken gerichtet ist, wird auch die Auswahl solcher einen hohen Freizeitwert mit sich bringender Wegabschnitte und die Einbeziehung derselben in eine zu ermittelnde Route als Erfindung angesehen.

Eine Möglichkeit, die in Anspruch 1 vorgesehene automatische Bestimmung der kurvenreichen Wegabschnitte vorzunehmen, ist in Anspruch 2 dargetan. Hier wird insbesondere auch auf die Kurvenradien abgestellt, so dass nur solche Wegabschnitte als "eine hohe Anzahl von Kurven" aufweisend gekennzeichnet werden, die entsprechende Kurven mit geringen Radien aufweisen. Letztlich kommt es für das angestrebte Fahrgefühl auf die erlebten Querbeschleunigungen an, die bei dem hier beschriebenen Verfahren unter Berücksichtigung der Kreisradien und der zu erwartenden Geschwindigkeiten simuliert werden. Je höher die Querbeschleunigungen, desto größer ist der Fahrspaß, so dass hier ein Mindestmaß für diese Querbeschleunigungen gewählt wird, welches ein Einstiegsmaß für eine Definition eines Wegabschnittes als "eine hohe Anzahl von Kurven aufweisend" bzw. "kurvig" bildet.

In Anspruch 3 ist eine weitere vorteilhafte Weiterbildung der Erfindung angegeben. Demnach wird bevorzugt, dass eine vorgebbare Gewichtung eingeführt wird, nach der der Rechner bei der Routenbestimmung solche Wegabschnitte mit einer hohen Anzahl von Kurven gegenüber kürzeren bzw. schnell abzufahrenden Wegabschnitten bevorzugt. Zum Bespiel kann hier die Kurvigkeit in der Gewichtung einen Faktor 2 erhalten, d.h. ein Wegabschnitt mit einer hohen Anzahl von Kurven wird gegenüber einem nicht kurvenreichen Wegabschnitt solange bevorzugt, solange er bis zu doppelt so lang ist bzw. eine doppelt so lange Zeit für das Abfahren benötigt.

Insbesondere bei einer Verwendung des erfindungsgemäßen Verfahrens bei der satellitengestützen Navigation erfolgt in vorteilhafter Weise zumindest die Erfassung des Startpunktes mittels einer satellitengestützen Positionserfassung, wie dieses in Anspruch 4 genannt ist.

In einem weiteren Aspekt der Erfindung wird schließlich ein Navigationsgerät, insbesondere für eine satellitengestütze Navigation, angegeben, welches für eine Routenbestimmung mittels eines oben beschriebenen Verfahrens eingerichtet ist.

Nachfolgend soll ein mögliches Vorgehen zum Bestimmen der "Kurvigkeit" eines bestimmten Streckenabschnittes noch einmal eingehender beschrieben werden:

Für einen in digitaler Form in den Kartendaten enthaltenen Straßenabschnitt mit mindestens drei sogenannten Shape- Points wird der Radius eines durch je drei aufeinander folgende Punkte gelegten Umkreises sowie der Winkel berechnet, unter dem man die beiden zwischen den äußeren und dem mittleren Shape-Point liegenden Straßenstücke vom Mittelpunkt des Umkreises sehen würde.

Nennt man zwei derart aufeinander folgende Straßenstücke ein "Road Wedge", so gilt als Maß für die Kurvigkeit die virtuelle Arbeit, die nötig ist eine Masse von 1 kg bei einer gegebenen Geschwindigkeit v₀ auf dem Umkreis um den Winkel zu verschieben, dem das "Road Wedge" entspricht.

Die gesamte virtuelle Arbeit für das Abfahren eines Straßenabschnittes wird durch Aufsummieren der allen "Road Wedges" zugeordneten virtuellen Arbeiten berechnet. Zwar werden hierbei "innere" Straßenstücke jeweils zweimal berücksichtigt, der sich daraus ergebende Fehler ist bei hinreichend vielen Shape-Points jedoch vernachlässigbar.

Insbesondere fällt bei der Berechnung der virtuellen Arbeit der Krümmungsradius weg. Man erhält das Maß demnach als Geschwindigkeitsquadrat (v₀²) mal Summe der Winkel der Road Wedges. Diese Vorgehensweise erlaubt eine sehr schnelle und genaue Berechnung.

Grundsätzlich lässt sich dieser Ansatz auch auf interpolierende mathematische Kurven (wie z.B. Splines) verallgemeinern und würde noch bessere Resultate liefern.

Bei der oben beschriebenen wie auch bei einer wie angedeutet verallgemeinerten Vorgehensweise ist es insbesondere auch möglich, Rechts- und Linkskurven zu unterscheiden.

Ferner ist es möglich, die mit den oben beschriebenen Mitteln ermittelte Kurvigkeit in Fahrerassistenzsystemen einzusetzen, um zum Beispiel anhand von aus den digitalen Kartendaten errechneten Kurvendaten unter Abgleich mit einer von einem Navigationssystem ermittelten, aktuellen Fahrzeugposition bei einer für eine kommende Kurve überhöhten Geschwindigkeit eine Warnung auszugeben oder sogar aktiv in die Fahrzeugsteuerung einzugreifen, um die Geschwindigkeit rechtzeitig vor der Kurveneinfahrt zu reduzieren.

Ebenfalls ergibt sich eine Möglichkeiten einer realistischeren Abschätzung der Reisezeit durch Berücksichtigung der maximal möglichen Fahrgeschwindigkeit entlang kurviger Streckenabschnitte, wenn eine maximale Querbeschleunigung als Grenze angenommen wird.

## Patentansprüche

1. Verfahren zur automatischen, rechnergestützten Bestimmung einer für Fahrzeuge befahrbaren Route von einem Startpunkt zu einem Zielpunkt anhand digitalisierter Kartendaten, die in digitaler Form einzelne Wegabschnitte aufweisen, wobei in einem Rechner ein Startpunkt und ein Zielpunkt erfasst wird, und wobei die Route unter Berücksichtigung unterschiedlicher Kriterien aus den Wegabschnitten zusammengestellt wird,
**dadurch gekennzeichnet,**
**dass** Kartendaten verwendet werden, die bei der Einrichtung des verwendeten Routenbestimmungs-Systcms derart aufbereitet wurden, dass Wegabschnitte mit einer hohen Anzahl an Kurven selektiert und durch Abspeicherung eines zugeordneten Kurvenflags in den Kartendaten markiert sind,
wobei der Rechner bei der Bestimmung der Route durch Zusammenstellung von Wegabschnitten solchermaßen mit Kurvenflag markierte Wegabschnitte bevorzugt in die Route einbezieht.

2. Verfahren nach einem Anspruch 1,
**dadurch gekennzeichnet,**
**dass** die Wegabschnitte, die eine hohe Anzahl von Kurven aufweisen, wie folgt bestimmt werden:
a) es werden automatisch Wegabschnitte ausgewählt, die in einer Vektordarstellung mehr als zwei Punkte (Anfangs- und Endpunkt) beinhalten;
b) bei den so ausgewählten Wegabschnitten werden von einem Rechner durch die benachbarten Punkte verlaufende Kreise bestimmt und deren Radien ermittelt;
e) aus einer bei diesen Wegabschnitten möglichen, automatisch ermittelten Durchschnittsgeschwindigkeit wird eine mögliche Querbeschleunigung errechnet, und dieser Wert wird als Maß für eine "Kurvigkeit" der Strecke definiert;
d) es wird der so ermittelte Wert für die "Kurvigkeit" automatisch
mit einem vorgegebenen Mindestwert verglichen und der Wegabschnitt bei Erreichen oder Überschreiten des Mindestwertes als kurvenreich **gekennzeichnet**,

3. Verfahren nach einem der vorhergehenden Ansprüche,
**dadurch gekennzeichnet,**
**dass** bei der Bestimmung der Route der Rechner sowohl die sich aus den verschiedenen Wegabschnitten ergebende Gesamtlänge oder Gesamtfahrzeit der Route als auch eine bevorzugte Verwendung von Wegabschnitten mit einer hohen Anzahl von Kurven berücksichtigt, wobei eine Gewichtung vorgegeben ist, anhand der der Rechner auch bei längerer oder zeitlich länger abzufahrender Wegstrecke solche Wegabschnitte mit einer hohen Anzahl von Kurven in die Route integriert.

4. Verfahren nach einem der vorhergehenden Ansprüche,
**dadurch gekennzeichnet,**
**dass** die Erfassung des Startpunktes mittels einer satellitengestützten Positionserfassung, insbesondere GPS, erfolgt.

5. Navigationsgerät, insbesondere für eine satellitengestützte Navigation,
**dadurch gekennzeichnet,**
**dass** es für eine Routenbestimmung mittels eines Verfahrens nach einem der vorhergehenden Ansprüche eingerichtet ist, insbesondere mittels einer dieses Verfahren verwirklichenden Software.

## Claims

1. A method for the automatic, computer-assisted determination of a route travelable by motor vehicles from a starting point to a destination point based on digitalized map data, which exhibit digital forms of individual road segments, wherein a computer acquires a starting point and a destination point, and wherein the route is determined based on the road segments by taking into account various criteria,
**characterized in that**
map data are used which are prepared during the setup of the used route determination system in such a way as to select road segments with a high number of curves and mark them by storing in said map data a curve flag allocated to said data,
wherein when determining the route by combining road segments the computer preferably integrates into the route such road segments thusly marked by a curve flag.

2. The method according to claim 1,
**characterized in that**
the road segments having a high number of curves are determined as follows:
a) Road segments having more than two points (starting point and end point) in a vector representation are automatically selected;
b) A computer takes the road segments selected in this way and determines circles traversing the adjacent points and their radii;
c) A possible transverse acceleration is computed from an automatically determined average velocity possible for these road segments, and this value is defined as a measure of "curviness" for the road segment;
d) The value for "curviness" determined in this way is automatically compared with a preset minimum value, and the road segment is designated as curvy when the minimum value is reached or exceeded.

3. The method according to one of the preceding claims,
**characterized in that**,
when determining the route, the computer takes into account both the overall distance or overall travel time for the route resulting from the various road segments, and a preferred application of road segments with a high number of curves, wherein a weighting is prescribed, based on which the computer integrates those road segments with a high number of curves into the route, even if the road segment is longer or takes more time to travel.

4. The method according to one of the preceding claims,
**characterized in that**
the starting point is determined by means of a satellite-assisted position acquisition system, in particular a GPS.

5. A navigation system, in particular for a satellite-assisted navigation,
**characterized in that**
it is set up for determining the route based on a method according to one of the preceding claims, in particular by means of software that implements this method.

## Revendications

1. Procédé de détermination automatique, assistée par ordinateur, d'une route parcourable par des véhicules à partir d'un point de départ jusqu'à un point de destination à l'aide de données cartographiques digitalisées présentant des segments de route individuels sous forme digitalisée, dans lequel un point de départ et un point de destination sont acquis par un ordinateur, et dans lequel la route est déterminée sur la base des segments de route en tenant compte de critères différents,
**caractérisé par**
l'utilisation de données cartographiques qui ont été préparées lors de l'installation du système pour la détermination de la route utilisé de telle manière que des segments de route présentant un grand nombre de virages sont sélectionnés et sont marqués au moyen de mémoriser dans les données cartographiques un fanion de virage assigné à ces segments,
l'ordinateur intégrant dans la route de préférence des segments de route ainsi marqués avec un fanion de virage lorsque la route est déterminée au moyen de combiner des segments de route.

2. Procédé selon la revendication 1,
**caractérisé en ce que**
les segments de route présentant un grand nombre de virages sont déterminés comme suit:
a) des segments de route contenant plus de deux points (point initial et point final) dans une représentation vectorielle sont sélectionnés automatiquement;
b) des cercles traversant les points voisins ainsi que les rayons de ceux-ci sont déterminés par un ordinateur pour les segments de route ainsi sélectionnés;
c) sur la base d'une vitesse moyenne déterminée automatiquement étant possible pour lesdits segments de route, une accélération transversale possible est calculée, la valeur résultante étant définie en tant que mesure spécifiant "la fréquence des virages" pour la route;
d) la valeur spécifiant "la fréquence des virages" ainsi déterminée est automatiquement comparée avec une valeur minimale prédéterminée et le segment de route est marqué comme présentant une fréquence élevée de virages lorsque la valeur minimale est atteinte ou dépassée.

3. Procédé selon l'une quelconque des revendications précédentes,
**caractérisé en ce que**
lorsque la route est déterminée, l'ordinateur tient compte de la longueur totale ou du temps total mis pour parcourir la route résultant desdits divers segments de route ainsi que d'une utilisation préférée de segments de route présentant un grand nombre de virages, dans lequel une pondération est prédéterminée sur la base de laquelle l'ordinateur intègre dans la route de tels segments de route présentant un grand nombre de virages également en cas d'une route étant plus longue ou nécessitant plus de temps pour être parcourue.

4. Procédé selon l'une quelconque des revendications précédentes,
**caractérisé en ce que**
le point de départ est déterminé au moyen d'un système de localisation assisté par satellite, particulièrement au moyen d'un GPS.

5. Appareil de navigation, particulièrement pour une navigation assistée par satellite,
**caractérisé en ce que**
celui-ci est agencé afin de déterminer une route en utilisant un procédé selon l'une des revendications précédentes, particulièrement en utilisant un logiciel permettant la réalisation dudit procédé.
